(19) Europäisches Patentamt

European Patent Office

Office européen des brevets

(11) **EP 1 396 507 A1**

(12) **EUROPEAN PATENT APPLICATION**

(43) Date of publication:
**10.03.2004 Bulletin 2004/11**

(51) Int Cl.7: **C08F 8/44**, C09D 133/02

(21) Application number: **03019935.0**

(22) Date of filing: **02.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **03.09.2002 JP 2002257337**

(71) Applicant: **JSR Corporation**
**Tokyo 104-0045 (JP)**

(72) Inventors:
• **Katou, Minoru**
  **Tokyo (JP)**
• **Kurita, Osamu**
  **Tokyo (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Reaction product of aqueous copolymer emulsion and polyvalent metal compound and polishing composition containing same**

(57) A reaction product of (I) an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b), provided that the total of monomers (a), (b), and (c) is 100 wt%, the copolymer having a Tg from -30°C to +20°C, and (II) a polyvalent metal compound. The reaction product is useful as a floor polish excelling in durability, adhesion to substrates, and recoatability that are well balanced with removability with an alkali, and decreased TVOC due to absence or low content of a low boiling point coalescent agent and plasticizer.

**Description**

BACKGROUND OF THE INVENTION

Field of the Invention

The present invention relates to a reaction product of an aqueous copolymer emulsion and a polyvalent metal compound useful as a component for a polishing composition suitable for polishing floors, furniture, vehicles, and the like and to the polishing composition comprising the reaction product.

Description of Background Art

A beautiful outward appearance is required for floor materials in hotels, department stores, and the like. Because these floor materials are severely contacted by shoes (especially, by women's high-heeled shoes) and the like, a polishing agent for the floor materials must have high durability.

As an aqueous polishing agent with excellent durability, JP-A 8-501577, for example, discloses an aqueous coating composition comprising an ethylenically unsaturated carboxylic acid copolymer containing a structure of heavy metal sulfonate such as copper sulfonate or iron sulfonate.

As an aqueous polishing agent that does not contain a heavy metal, JP-B 1-59310 discloses a composition using a crosslinkable unsaturated monomer. Although this polishing agent has excellent water resistance, the agent cannot satisfy the durability requirement of the level demanded in recent years. Removability with an alkali prior to recoating is not necessarily sufficient.

A copolymer latex used for an aqueous coating composition excelling in durability, gloss, and adhesion, the inventors of the present invention disclosed latex of a copolymer containing (i) a (meth)acrylate mixture containing branched alkyl (meth)acrylates and linear alkyl (meth)acrylates and (ii) an ethylenically unsaturated carboxylic acid, having a glass transition temperature (Tg) of 20-80°C and having an average particle diameter of 300-2,000 Å (JP-A 4-311712).

JP-A 2-219863 discloses a composition for floor polish and the like obtained by reacting a copolymer of acidic monomers such as methacrylic acid, maleic anhydride, and vinyl phenol having a Tg of 22°C or higher with a transition metal compound.

However, to further increase durability, a floor polish is required to have improved adhesion to various substrates such as concrete, stone, and wood and improved recoatability. Taking repair of damaged coatings into consideration, making these properties compatible with removability with an alkali is also desired. However, these objects have not been sufficiently achieved by conventional floor polish. In addition, conventional floor polish that comprises about 50 parts by weight of diethylene glycol monoethyl ether, as a coalescent agent, for 100 parts by weight of a copolymer, for example, cannot satisfy the requirements for reducing environmental burdens by decreasing TVOC (total volatile organic compounds) that has been demanded more recently.

An object of the present invention is to provide a reaction product of an aqueous copolymer emulsion and a polyvalent metal compound useful as a component for a polishing composition excelling in durability, adhesion to substrates, and recoatability that are well balanced with removability with an alkali, and decreased TVOC due to absence or low content of a coalescent agent and plasticizer having a low boiling point.

Another object of the present invention is to provide a floor polish comprising the above reaction product.

SUMMARY OF THE INVENTION

Specifically, the present invention provides a reaction product of (I) an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b), provided that the total of monomers (a), (b), and (c) is 100 wt%, the copolymer having a Tg from -30°C to +20°C, and (II) a polyvalent metal compound.

In a preferred embodiment, the Tg of the above copolymer is from -20°C to +20°C.

In the above reaction product, the polyvalent metal compound is preferably selected from the group consisting of oxides, hydroxides, carbonates, acetates, hypophosphates, phosphates, and sulfates of calcium, magnesium, zinc, aluminum, tin, tungsten, or zirconium.

In a preferred embodiment of the above reaction product, the polyvalent metal compound is calcium hydroxide, calcium acetate, calcium hypophosphate, calcium phosphate, zinc oxide, zinc hydroxide, zinc carbonate, or zinc sulfate.

The present invention further provides a polishing composition comprising the above reaction product.

In a preferred embodiment, the above polishing composition further comprises one or more components selected from the group consisting of other resin emulsion, rubber emulsion, alkali-soluble resin, wax emulsion, coalescent agent, plasticizer, wetting agent, dispersant, leveling agent, antiseptic agent, and filler.

The above other resin emulsion is preferably an emulsion of an acrylic resin having a Tg from -30°C to +70°C.

Other objects, features and advantages of the invention will hereinafter become more readily apparent from the following description.

DETAILED DESCRIPTION OF THE INVENTION AND PREFERRED EMBODIMENTS

The reaction product of an aqueous copolymer emulsion and a polyvalent metal compound and the polishing composition of the present invention will be described in detail.

(1) Component (I)

The component (I) for the reaction product of the present invention is an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b), provided that the total of monomers (a), (b), and (c) is 100 wt%, wherein the copolymer has a Tg from -30°C to +20°C.

The copolymer prepared from the monomer components (a), (b), and (c) is hereinafter referred to as copolymer (A). The monomer components (a), (b), and (c) for the copolymer (A) will now be described.

(1-1) Monomer component (a)

As examples of the ethylenically unsaturated carboxylic acid monomer used in the copolymer of the present invention, mono-carboxylic acids such as (meth)acrylic acid and crotonic acid; dicarboxylic acids such as maleic acid, fumaric acid, and itaconic acid; half esters such as monomethyl maleate, monomethyl itaconate, succinic acid mono-[2-(meth)acryloyloxyethyl] and phthalic acid mono-[2-(meth)acryloyloxyethyl]; monocarboxylic acid anhydrides such as (meth)acrylic acid anhydride; and dicarboxylic acid anhydrides such as maleic acid anhydride can be given. These ethylenically unsaturated carboxylic acid monomers may be used either individually or in combination of two or more.

As the salt of the ethylenically unsaturated carboxylic acid monomer, sodium salt, potassium salt, and ammonium salt, for example, can be given. These salts of ethylenically unsaturated carboxylic acid monomers may be used either individually or in combination of two or more.

Preferably, (meth)acrylic acid, succinic acid mono-[2-(meth)acryloyloxyethyl], and phthalic acid mono-[2-(meth)acryloyloxyethyl] are used as an ethylenically unsaturated carboxylic acid monomer or the salt thereof either individually or in combination.

The amount of the ethylenically unsaturated carboxylic acid monomers and the salts in the copolymer (A) is usually 5-50 wt%, preferably 7-45 wt%, and still more preferably 10-40 wt%. If this amount is less than 5 wt%, the product exhibits only poor durability and impaired removability; if more than 50 wt%, coatability of the product are impaired.

(1-2) Monomer component (b)

As examples of the ethylenically unsaturated sulfonic acid monomer in the copolymer (A), isoprene sulfonic acid, styrene-3-sulfonic acid, styrene-4-sulfonic acid, $\alpha$-methylstyrene-3-sulfonic acid, $\alpha$-methylstyrene-4-sulfonic acid, 2-acrylamide-2-methylpropane sulfonic acid, allylalkyl sulfonic acids, sulfates of polyoxyethylene alkylallyl ether, and sulfates of polyoxyethylene polyoxypropylene alkylallyl ether can be given. These ethylenically unsaturated sulfonic acid monomers may be used either individually or in combination of two or more.

As the salt of the ethylenically unsaturated sulfonic acid monomer, sodium salt, potassium salt, and ammonium salt, for example, can be given. These salts of ethylenically unsaturated sulfonic acid monomers may be used either individually or in combination of two or more.

Sodium isoprene sulfonate, sodium styrene-4-sulfonate, and the like are preferable as the ethylenically unsaturated sulfonic acid monomer or the salt thereof.

The amount of the ethylenically unsaturated sulfonic acid monomers and the salts in the copolymer (A) is usually 0 . 05-20 wt%, preferably 0.1-10 wt%, and still more preferably 0.2-5 wt%. If this amount is less than 0.05 wt%, the product exhibits only poor black heel mark (BHM) resistance and reduced emulsion stability; if more than 20 wt%, water resistance is reduced.

**(1-3) Monomer component (C)**

The following compounds can be given as ethylenically unsaturated monomers copolymerizable with the components (a) and (b) : alkyl (meth) acrylates such as methyl (meth) acrylate, ethyl (meth)acrylate, n-propyl (meth) acrylate, isopropyl (meth)acrylate, n-butyl (meth)acrylate, i-butyl (meth)acrylate, t-butyl (meth)acrylate, n-amyl (meth) acrylate, i-amyl (meth)acrylate, n-hexyl (meth)acrylate, n-octyl (meth)acrylate, 2-ethylhexyl (meth)acrylate, and cyclohexyl (meth)acrylate; hydroxyl group-containing (meth)acrylates such as 2-hydroxyethyl (meth)acrylate, 3-hydroxypropyl (meth)acrylate, 4-hydroxybutyl (meth)acrylate, diethylene glycol mono-(meth)acrylate, polyethylene glycol mono(meth)acrylate, dipropylene glycol mono-(meth)acrylate, and polypropylene glycol mono(meth)acrylate; fluorine-containing (meth)acrylates such as 2,2,2-trifluoroethyl (meth)acrylate, 8,8,8,7,7-pentafluoro-n-octyl (meth)acrylate; amino group-containing (meth)acrylates such as aminomethyl (meth)acrylate, dimethylaminomethyl (meth)acrylate, 2-aminoethyl (meth)acrylate, 2-dimethylaminoethyl (meth)acrylate, and 2-(n-butylamino)ethyl (meth)acrylate; other (meth)acrylates such as benzyl (meth)acrylate, 2-phenoxyethyl (meth)acrylate, 2-(alkylphenoxy)ethyl (meth)acrylate, phenoxydiethylene glycol (meth)acrylate, phenoxypolyethylene glycol (meth)acrylate, phenoxypropylene glycol (meth) acrylate, phenoxydipropylene glycol (meth)acrylate, phenoxypolypropylene glycol (meth)acrylate, 2-hydroxy-3-phenoxypropyl (meth)acrylate, phthalic acid ester of (ethylene glycol mono(meth)acrylate); aromatic vinyl monomers such as styrene, α-methylstyrene, 2-methylstyrene, 3-methylstyrene, 4-methylstyrene,4-ethylstyrene, 4-t-butylstyrene, 3,4-dimethylstyrene, 4-methoxystyrene, 4-ethoxystyrene, 4-hydroxymethylstyrene, 2-chlorostyrene, 3-chlorostyrene, 4-chlorostyrene, 4-chloro-3-methylstyrene, 2,4-dichlorostyrene, 2,6-dichlorostyrene, and 1-vinylnaphthalene; unsaturated amide compounds such as (meth)acrylamide, N-aminomethyl (meth)acrylamide, N-(dimethylaminomethyl) (meth)acrylamide, N-(2-aminoethyl) (meth)acrylamide, N-(2-dimethylaminoethyl) (meth)acrylamide, and N-(3-methylaminopropyl) (meth)acrylamide; cyanated vinyl compounds such as (meth)acrylonitrile, α-chloroacrylonitrile, and cyanated vinylidene; halogenated vinyl compounds such as vinyl fluoride, vinyl chloride, and vinylidene chloride; vinyl esters such as vinyl acetate and fatty acid vinyl esters; unsaturated epoxy compounds such as allyl glycidyl ether, glycidyl (meth)acrylate, and methyl glycidyl (meth)acrylate; acrolein, diacetone acrylamide, 2-acetoxyethyl (meth)acrylate, and caprolactone-modified acetoxy (meth)acrylate; and carbonyl group-containing unsaturated compounds that are commercially available under the trademarks such as PLACCEL ATFA1, PLACCEL ATFA2, PLACCEL ATFM1, and PLACCEL ATFM2 (manufactured by Daicel Chemical Industries, Ltd.).

These other ethylenically unsaturated monomers may be used either individually or in combination of two or more. Of these other ethylenically unsaturated monomers, alkyl (meth)acrylates, aromatic vinyl compounds, carbonyl group-containing unsaturated compounds, and the like are preferable, with particularly preferable compounds being methyl methacrylate, ethyl (meth)acrylate, n-butyl (meth)acrylate, i-butyl (meth)acrylate, styrene, α-methylstyrene, and diacetone acrylamide;

**(1-4) Tg of copolymer (A)**

The Tg of the copolymer (A) (hereinafter referred to as "Tg") is from -30°C to +20°C, preferably from -20°C to +20°C, and more preferably from -10°C to +20°C. If Tg is less than -30°C, stain resistance declines; if more than +20°C, not only does adhesion and recoatability decrease, but it is also difficult to reduce TVOC.

In addition, the copolymer (A) may contain either one Tg or two or more Tgs within a transitional area of the differential thermal quantity curve.

When the copolymer (A) has two or more Tgs within a transitional area of the differential scanning calorimetric curve, the difference (ΔTg) between the highest Tg and the lowest Tg is preferably 5°C or more. In addition, the copolymer (A) may have a multi-phase structure, in which a copolymer component with a low Tg and a copolymer component with a high Tg are included in the same particle. This structure improves durability of coating films.

**(1-5) Average particle diameter of copolymer (A)**

The average particle diameter was determined as the light scattering average particle diameter measured by the dynamic light scattering method using a dynamic light scattering spectrophotometer system (LPA3000 manufactured by Otsuka Corp.) . The average particle diameter of the copolymer (A) is preferably 0.02-0.5 μm, more preferably 0.05-0.2 μm, and particularly preferably 0.06-0.1 μm. If less than 0.02 μm, leveling characteristics may be poor, if more than 0.5 μm, glossiness of the product may be inferior.

**(2) Component (II)**

The component (II) for the reaction product of the present invention is a polyvalent metal compound.

As examples of the polyvalent metal compound to be reacted with the copolymer (A), oxides, hydroxides, carbonates, acetates, hypophosphates, phosphates, and sulfates of calcium, magnesium, zinc, aluminum, tin, tungsten, zirconium, or the like can be given. These polyvalent metal compounds may be used either individually or in combination of two or more.

Among these polyvalent metal compounds, calcium hydroxide, calcium acetate, calcium hypophosphate, calcium phosphate, zinc oxide, zinc hydroxide, zinc carbonate, zinc sulfate, and the like are preferable.

(3) Method for preparing copolymer (A)

There are no specific restrictions to the method for preparing the copolymer (A). A method of preparing an aqueous emulsion of the copolymer (A) by a conventional emulsion polymerization and reacting the copolymer with a polyvalent metal compound is preferable. This method will now be described in more detail.

Specifically, an aqueous emulsion of copolymer (A) can be prepared by polymerizing monomers comprising the above components (a), (b), and (c), in an aqueous medium in the presence of an emulsifier and polymerization initiator, optionally adding a reductant, chain transfer agent, pH adjustor, chelating agent, and the like.

The above-described monocarboxylic acid anhydrides (for example, (meth)acrylic acid anhydride) and dicarboxylic acid anhydrides (for example, maleic acid anhydride) in the component (a) are converted into carboxylic acids during emulsion polymerization in an aqueous medium. Therefore, these anhydrides may be used as ethylenically unsaturated carboxylic acid monomer components in the emulsion polymerization.

Known methods for feeding monomers can be used in the emulsion polymerization, for example, a method of feeding all monomers to the reaction system batchwise, a method of feeding a part of the monomers to initiate the polymerization and then continuously or intermittently adding the remaining part of the monomers to polymerize, and a method of feeding the monomers continuously or intermittently.

The components used in the emulsion polymerization for obtaining the copolymer (A) will now be described.

(3-1) Emulsifier

Among the compounds for component (b), sodium styrene-3-sulfonate, styrene-4-sulfonate, $\alpha$-methylstyrene-3-sulfonate, $\alpha$-methylstyrene-4-sulfonate, allylalkyl sulfonates, sulfates of polyoxyethylene alkylallyl ether, and sulfates of polyoxyethylene polyoxypropylene alkylallyl ether can function as a reactive emulsifier. Therefore, it is not always necessary to add other emulsifiers if these compounds are used as the component (b). This, however, by no means precludes optional addition of such other emulsifiers.

As examples of other emulsifiers, anionic surfactants, nonionic surfactants, cationic surfactants, amphoteric surfactants, and water-soluble polymers can be given.

As examples of the anionic surfactant, higher alcohol sulfates such as sodium lauryl sulfate, alkylbenzene sulfonates, aliphatic sulfonates, polyethylene glycol alkyl ether sulfate, and polyethylene glycol polypropylene glycol alkyl ether sulfate can be given. More specifically, sodium higher alcohol sulfate, sodium alkylbenzene sulfonate, sodium succinic acid dialkyl sulfonate, alkyl diphenyl ether sodium disulfonate, and the like can be given. These anionic surfactants may be used either individually or in combination of two or more. In addition, the anionic surfactants may be used in combination with one or more nonionic surfactants and water-soluble polymers described below.

Of the above anionic surfactants, sodium lauryl sulfate, polyoxyethylene alkyl ether sulfate, polyoxyethylene polyoxypropylene alkyl ether sulfate, and the like are preferably used.

As examples of the nonionic surfactant, polyoxyethylene alkyl ether, polyoxyethylene polyoxypropylene alkylether, polyoxyethylene alkylallyl ether, polyoxyethylene nonylphenyl ether, and polyoxyethylene octylphenyl ether can be given. These nonionic surfactants may be used either individually or in combination of two or more.

Of the above nonionic surfactants, polyoxyethylene alkyl ether, polyoxyethylene polyoxypropylene alkyl ether, and the like are preferable.

Lauryl betaine, for example, is preferable as the amphoteric surfactant. As examples of the cationic surfactant, alkyl pyridinyl chloride and alkyl ammonium chloride can be given.

As examples of the water soluble polymer, partially or completely saponified polyvinyl alcohol, polyacrylate, water-soluble (meth)acrylate copolymer, salt of styrene-maleic acid copolymer, salt of styrene-(meth)acrylic acid copolymer, poly(meth)acrylamide, and water-soluble (meth)acrylamide copolymer can be given. These water soluble polymers may be used either individually or in combination of two or more.

Of the above water soluble polymers, partially saponified polyvinyl alcohol, water soluble (meth)acrylate copolymer, salt of styrene-maleic acid copolymer, styrene-(meth)acrylic acid copolymer, and the like are preferable.

The emulsifier may be added to the polymerization system all at one time, batchwise, or continuously, or these methods of addition may be employed in combination. The amount of emulsifiers including reactive emulsifiers in the component (b) is preferably 0. 05 part by weight or more for 100 parts by weight of the total amount of monomers. When no reactive emulsifier is used, the amount of emulsifiers other than the reactive emulsifiers is preferably 5 parts by weight or less for 100 parts by weight of monomers.

(3-2) Polymerization initiator

As the polymerization initiator, water soluble initiators, oil soluble initiators, and the like can be given.
As examples of the water soluble initiator, persulfate and hydrogen peroxide can be given. These water soluble initiators may be used either individually or in combination of two or more.
The water soluble initiators can be used in combination with one or more reductants such as sodium pyrobisulfite, sodium sulfite, sodium thiosulfate, L-ascorbic acid and a salt thereof, sodium formaldehyde sulfoxylate, and ferrous sulfate can be given.
As examples of the oil soluble initiator, 2,2'-azobisisobutyronitrile, 2,2'-azobis(4-methoxy-2,4-dimethylvaleronitrile), 2,2'-azobis-2,4-dimethylvaleronitrile, 1,1'-azobis-cyclohexane-1-carbonitrile, benzoyl peroxide, di-t-butyl peroxide, t-butyl hydroperoxide, cumene hydroperoxide, isopropylbenzene hydroperoxide, paramethane hydroperoxide, 3,5,5-trimethylhexanol peroxide, and t-butylperoxy(2-ethylhexanoate) can be given. These oil soluble initiators may be used either individually or in combination of two or more.
Of the above oil soluble initiators, 2,2'-azobisisobutylonitrile, benzoyl peroxide, t-butyl hydroperoxide, cumene hydroperoxide, isopropylbenzene hydroperoxide, paramethane hydroperoxide, 3,5,5-trimethylhexanol peroxide, t-butylperoxy(2-ethylhexanoate), and the like are preferable.
The oil soluble initiators can be used dissolved in the monomer or solvent in emulsion polymerization.
The initiator may be added to the polymerization system all at one time, batchwise, or continuously, or these methods of addition may be employed in combination.
The amount of polymerization initiator used is preferably in an amount of 0.03-3 parts by weight, and more preferably 0.1-1 part by weight for 100 parts by weight of the total amount of monomers.

(3-3) Chain transfer agent

Given as examples of the chain transfer agent are halogenated hydrocarbons (for example, carbon tetrachloride, chloroform, bromoform), mercaptans (for example, n-dodecylmercaptan, t-dodecylmercaptan, n-octylmercaptan, alkyl thioglycolate), xanthogens (for example, dimethylxanthogen disulfide, diisopropylxanthogen disulfide), terpenes (for example, dipentene, terpinolene), 1,1-diphenylethylene, unsaturated cyclic hydrocarbons (for example, 9,10-dihydroanthracene, 1,4-dihydronaphthalene, indene, 1,4-cyclohexadiene), unsaturated heterocyclic compounds (for example, xanthene, 2,5-dihydrofuran), and $\alpha$-methylstyrene dimers (at least one of 2,4-diphenyl-4-methyl-1-pentene (I), 2,4-diphenyl-4-methyl-pentene (II), and 1,1,3-trimethyl-3-phenylindan (III), and preferably a mixture of (I), (II), and (III) at a weight ratio (I)/((II)+(III))=(40-100)/(0-60)). These chain transfer agents may be used either individually or in combination of two or more.
The chain transfer agent may be added to the polymerization system all at one time, batchwise, or continuously, or these methods of addition may be employed in combination.
The amount of chain transfer agent used is preferably from 5 parts by weight or less for 100 parts by weight of the total amount of monomers.

(3-4) pH adjusting agent

As examples of the pH adjusting agent, ammonia water, sodium hydroxide, potassium hydroxide, ammonium hydroxide, sodium hydrogencarbonate, sodium carbonate, potassium carbonate, and disodium hydrogenphosphate can be given. These pH adjusting agents may be used either individually or in combination of two or more.
The amount of the pH adjusting agent used is preferably one part by weight or less for 100 parts by weight of the total amount of monomers.

(3-5) Chelating agents

As examples of the chelating agent, glycine, alanine, and sodium ethylenediamine tetraacetate can be given. These chelating agents may be used either individually or in combination of two or more.
The amount of the chelating agent used is preferably one part by weight or less for 100 parts by weight of the total amount of monomers.

(3-6) Solvent

As a solvent optionally used in the emulsion polymerization, a small amount of acetone, methyl ethyl ketone, methyl isobutyl ketone, trichlorotrifluoroethane, dimethylsulfoxide, toluene, di-n-butylphthalate, tri(2-n-butoxyethyl) phosphate, methylpyrrolidone, ethyl acetate, alcohols, cellosolves, carbitols, or the like can be added to the extent not impairing processability, emergency safety, environmental safety, and production safety.

The polymerization temperature in the emulsion polymerization is usually 30-100°C, and preferably 40-95°C. The reaction time is usually 1-30 hours, and preferably 2-20 hours.

The final polymerization conversion rate in the emulsion polymerization is 90-100 wt%, and preferably 95-100 wt%. The reaction product of the present invention can be obtained by adding a polyvalent metal compound to the aqueous emulsion of copolymer (A) and reacting the mixture preferably with stirring.

(4) Method for preparing the reaction product

There are no specific restrictions to the method for preparing the reaction product component (I) and component (II) of the present invention. The polyvalent metal compound can be added to the aqueous emulsion of copolymer (A) either in the form of a powder, a water dispersion, or an aqueous solution. When the polyvalent metal compound is added in the form of a powder, the average particle diameter of the powder is preferably 0.01-100 μm, and more preferably 0.01-50 μm. When the polyvalent metal compound is added as a dispersion or solution in water, a dispersant or emulsifier may be added.

The amount of the polyvalent metal compounds to be reacted with the copolymer (A) is preferably less than one chemical equivalent, more preferably 0.01-0.9 chemical equivalent, and particularly preferably 0.02-0.8 chemical equivalent. If the amount is one or more chemical equivalent, water resistance and removability with alkali may decrease. If the amount of the polyvalent metal compounds is less than 0.01 chemical equivalent, durability may be insufficient.

When the copolymer (A) is reacted with the polyvalent metal compound, the reaction temperature is higher than Tg (in the case where the copolymer (A) has one Tg) or higher than the higher Tg (in the case where the copolymer (A) has two or more Tgs) preferably by 5-80°C, and particular preferably 10-70°C to ensure rapid reaction of the copolymer (A) with the polyvalent metal compound. If the reaction temperature is too high, the aqueous emulsion of copolymer (A) becomes unstable, resulting in coagulation or decomposition of the copolymer (A).

The reaction time is usually from 30 minutes to 5 hours, and preferably from 1 to 4 hours. The reaction of the copolymer (A) and the polyvalent metal compound may be carried out batchwise, semi-continuously, or continuously.

When the copolymer (A) is reacted with the polyvalent metal compound, it is possible to add ammonia, ethanolamine, alkylamino ethanol, carbodiimide or their derivatives, polycarbodiimide resin, hydrazide compounds such as adipic acid dihydrazide, hydrazide resin, and the like may be added simultaneously, before, or after the addition of the polyvalent metal compound.

The amount of these components to be added is usually 0.1-20 parts by weight, and preferably 0.2-10 parts by weight for 100 parts by weight of the polyvalent metal compound.

The reaction product of the aqueous emulsion of the copolymer (I) and the polyvalent metal compound thus obtained can be used as a floor polish as is or as a major component for a floor polish.

(5) Polishing composition

(5-1) Additives

In addition to the reaction product of the aqueous emulsion of the copolymer (I) and the polyvalent metal compound, the polishing composition of the present invention may comprise a resin emulsion, rubber emulsion, alkalisoluble resin, wax emulsion, coalescent agent, plasticizer, wetting agent, dispersant, leveling agent, antiseptic agent, and the like.

Given as examples of the resin emulsion and rubber emulsion are acrylic resin emulsion, styrene-acrylonitrile copolymer emulsion, polystyrene emulsion, ethylene-vinyl acetate copolymer emulsion, polyvinyl acetate emulsion, polyvinyl chloride emulsion, polyurethane resin emulsion, silicone resin emulsion, acrylic rubber emulsion, butadiene-styrene rubber (SBR) emulsion, and butadiene-acrylonitrile rubber (NBR) emulsion. The emulsions may be used either individually or in combination of two or more.

Among the resin emulsions and rubber emulsions mentioned above, emulsion of acrylic resin with a Tg from -30°C to +70°C, preferably from -20°C to +40°C, and more preferable from -10°C to +20°C is desirable. Adding such an acrylic resin emulsion can reduce the amount of coalescent agent and plasitcizer. In particular, emulsion of acrylic resin with a Tg of 0-60°C, preferably of 10-50°C can remarkably improve stain resistance. When two or more acrylic resin emulsions are added or an acrylic resin emulsion is added together with other resin emulsions and/or rubber emulsions, resins or rubbers in the emulsion mixture should have a Tg from -30°C to +70°C, preferably from -20°C to +50°C, and more preferable from -10°C to +40°C.

As the acrylic resin emulsion, emulsions of copolymer containing at least one alkyl (meth) acrylate selected from the group consisting of methyl methacrylate, ethyl (meth) acrylate, n-butyl (meth)acrylate, i-butyl (meth)acrylate, t-butyl (meth)acrylate, 2-ethylhexyl (meth)acrylate, and cyclohexyl (meth)acrylate are desirable. An emulsion of a copolymer containing at least one of the above-described alkyl (meth)acrylates in an amount of preferably 10-90 wt%, more preferably 15-85 wt%, and particularly preferably 20-80 wt% is more desirable.

The ratio of copolymer (A) to the other resin emulsions and/or rubber emulsions, in terms of weight of solid content, is in the range of 100:0 to 10:90, preferably 100:0 to 15:85, more preferably 100: 0 to 20: 80, and particular preferably 100 : 0 to 30:70. If the ratio is less than 10:90, adhesion and recoatability tend to be impaired.

As examples of the alkali-soluble resin, (meth)acrylate/$\alpha$,$\beta$-unsaturated carboxylic acid copolymer, (meth) acrylate/$\alpha$,$\beta$-unsaturated carboxylic acid/styrene copolymer, styrene/maleic acid copolymer, shellac, and rosin-modified maleic resin can be given. These alkali-soluble resins may be used either individually or in combination of two or more.

The alkali-soluble resin can improve the leveling properties and removability with alkali.

The amount of alkali-soluble resin to be added is usually 50 parts by weight or less, preferably 5-40 parts by weight, and still more preferably 10-30 parts by weight per 100 parts by weight of the copolymer (A). If the amount exceeds 50 parts by weight, durability tends to decrease.

As the wax emulsion, a polyethylene-based emulsion and the like can be given.

The amount of wax emulsion to be added is usually 40 parts by weight or less, preferably 5-30 parts by weight, and still more preferably 10-30 parts by weight, on a solid basis, for 100 parts by weight of the copolymer (A). If the amount of wax emulsion is more than 40 parts by weight, the product may have poor glossiness and inferior appearance.

As examples of the coalescent agent, benzyl alcohol, (poly)alkylene glycols such as diethylene glycol mono-alkyl ether and ethers thereof, and mono-methyl ether or mono-ethyl ether of 3-methoxy-1-butanol can be given.

As examples of the plasticizer, tri-n-butoxy phosphate, tri(2-n-butoxyethyl)phosphate, triphenyl phosphate, polyhydric alcohols, isophorone, benzyl-n-butyl phthalate, di-n-butyl phthalate, dimethyl phthalate, and Texanol CS-12 (manufactured by Chisso Corp.) can be given.

These coalescent agents and plasticizers can be respectively used either individually or in combination of two or more. A coalescent agent and plasticizer can be used in combination.

The total amount of coalescent agents and the plasticizers to be added is usually 60 parts by weight or less, preferably 5-50 parts by weight, and still more preferably 10-40 parts by weight for 100 parts by weight of the copolymer (A). If the total amount exceeds 60 parts by weight, durability tends to decrease. The polishing composition of the present invention can be used as reduced TVOC by adding only small amount of, or without adding, a low boiling point coalescent agent.

As examples of the wetting agent, potassium salts of perfluoroalkyl carboxylic acid, silicon-based wetting agents, and acetylene-based wetting agents can be given.

As examples of the dispersant, anionic surfactants and nonionic surfactants can be given.

As examples of the leveling agent, rosin acid ester can be given.

As examples of the antiseptic agent, 1,2-benzoyl-iso-thiazolin-3-one and a mixture of 2-methyl-4-iso-thiazolin-3-one and 5-chloro-2-methyl-4-iso-thiazolin-3-one can be given.

As examples of the filler, colloidal silica, mica, and scale-like fillers can be given.

A defoamer may also be added. In addition, a hydrazide compound such as adipic acid dihydrazide may be added to the polishing composition that contains copolymer (A) comprising a carbonyl group-containing unsaturated compound such as acrolein and diacetone acrylamide.

The polishing composition of the present invention is useful as a floor polish for polishing floors, furniture, vehicles, and the like. When used as a floor polish, the polishing composition of the present invention is applied to a substrate by a conventional method such as fabric coating, brushing, or brush spraying, immediately followed by drying in air or by heating, thereby producing a coating film with a strong luster.

EXAMPLES

The embodiments of the present invention are described in more detail by examples. In the examples, "%" and "part (s)" refers to those on weight basis unless otherwise indicated.

Example 1

(1) Polymerization

A reaction vessel (3 l) made of glass equipped with a stirrer, reflux condenser, thermometer, and dropping funnel was charged with 100 parts of ion-exchanged water, 0.3 part of sodium lauryl sulfate, and 0.1 part of ammonium persulfate. After replacing the internal atmosphere with nitrogen, the temperature was controlled to 65°C while stirring. Then, an emulsion previously prepared by mixing 50 parts of ion-exchanged water, 1 part of sodium lauryl sulfate, 0.1 part of ammonium persulfate, and the monomers shown in Table 1 was added dropwise to the reaction vessel over three hours. During the addition of the emulsion, nitrogen gas was introduced and the temperature was maintained at 80°C. After the addition, the mixture was stirred for two hours at 85°C and cooled to 25°C, thereby obtaining a copolymer emulsion. The polymerization conversion rate was 98% or more. There was almost no coagulum produced during polymerization.

(2) Preparation of reaction product of copolymer and polyvalent metal compound

The copolymer emulsion was adjusted to pH 5 with potassium carbonate while stirring at 40°C, then the polyvalent metal compounds listed in Table 1 were slowly added while stirring to prepare a reaction product of the copolymer and polyvalent metal compound.

(3) Preparation of polishing composition

A polishing composition was prepared according to the following formulation.

| Component | |
|---|---|
| Reaction product of copolymer and polyvalent metal compound *1 | 80 parts |
| Wax emulsion *2 | 15 parts |
| Aqueous solution of alkali-soluble resin *3 | 5 parts |
| Aqueous solution of fluorine-based surfactant *4 | 0.5 part |

*1 Prepared by mixing the reaction product of copolymer and polyvalent metal compound with diethylene glycol mono-ethyl ether and tri(2-n-butoxyethyl)phosphate at a weight ratio shown in Table 1 to adjust the minimum film-formation temperature (MFT) to 5°C or less and adjusting the solid content to 19 wt% by the addition of ion-exchanged water.

*2 Wax emulsion: HYTEC E-4000 (manufactured by Toho Chemical Co., Ltd. Solid content: 19%)

*3 Aqueous solution of rosin ester resin (LR400, manufactured by Arakawa Chemical Industries, Ltd.) solid content : 15%, pH 8.6.

*4 Aqueous solution of $C_6F_{17}SO_2N(C_2H_5)CH_2COOK$ (solid content : 1%)

Examples 2-4

In Examples 2-4, (1) the copolymers, (2) the reaction products of copolymer and polyvalent metal compound, and (3) the polishing compositions were prepared in the same manner as in Example 1, except for using monomers and polyvalent metal compounds respectively listed in Table 1 for these examples, but without using a coalescent agent in Example 4.

Example 5

An acrylic resin emulsion was prepared in the same manner as in Example 1 (1) from 28 parts of n-butyl acrylate, 43 parts of methyl methacrylate, 17 parts of styrene, 10 parts of methacrylic acid, and 2 parts of acrylic acid. The polishing composition was prepared in the same manner as in Example 1 (3) using 80 parts of a 1:1 mixture of the reaction products of copolymer and polyvalent metal compound obtained in Example 1 (2) and this acrylic resin emulsion, using the additives shown in Table 1.

Comparative Examples 1-4

In Comparative Examples 1-4, (1) the copolymers, (2) the reaction products of copolymer and polyvalent metal compound, and (3) the polishing compositions were prepared in the same manner as in Example 1, except for using monomers, polyvalent metal compounds, and additives respectively listed in Table 1 for these Comparative Examples.

Evaluation

The polishing compositions were evaluated as follows. The evaluation results are shown in Table 1. (1) Black heel mark (BHM) resistance

Samples for evaluation were prepared by repeating three times the procedure of applying the polishing composition to homogeneous tiles in an amount of 10 g/m$^2$, followed by drying. The samples were placed on a busy street (50-100 pedestrians per day) to observe the degree of black heel mark (BHM) attachment by the naked eye. The results of evaluation were classified as follows. Black heel mark resistance, as well as gloss maintenance rate, is used as a standard for evaluating durability.

    5: No BHMs are observed.
    4: There are only a small number of BHMs.
    3: There are a large number of BHMs.
    2: There are a considerable number of BHMs.
    1: There are a great number of BHMs.

(2) Gloss

Samples were prepared in the same manner as in the BHM resistance evaluation test and reflection at an angle of 60° was measured using a Murakami gloss meter.

(3) Gloss maintenance rate

Samples were prepared in the same manner as in the BHM resistance evaluation test. Gloss was measured immediately after preparation (initial gloss) and after leaving the sample for two weeks (gloss after leaving) to calculate the gloss maintenance rate according to the following formula:

$$\text{Gloss maintenance rate (\%)} = \frac{\text{Gloss after leaving} \times 100}{\text{Initial gloss}}$$

(4) Recoatability

Samples were prepared by repeating five times the procedure of applying the polishing composition to homogeneous tiles in an amount of 10 g/m$^2$, followed by drying. A degree of gloss decrease was evaluated by naked eye observation.

(5) Adhesion

Samples were prepared in the same manner as in the BHM resistance evaluation test. A peeling test was carried out using a cellophane tape (width: 18 mm) manufactured by Nitto Denko Co., Ltd. The rate of coating film adhesion to homogeneous tiles was evaluated according to the following standard.

    5 : 90~100%
    4 : 70~89%
    3 : 50~69%
    2 : 30~49%
    1 : 0~20%

The abbreviations in Table 1 stand for the following compounds.

| | |
|---|---|
| BA: | n-Butyl acrylate |
| MMA: | Methyl methacrylate |
| TBMA: | t-Butyl methacrylate |
| CHMA: | Cyclohexyl methacrylate |
| 2EHA: | 2-Ethylhexyl acrylate |
| ST: | Styrene |
| MAA: | Methacrylic acid |
| AA: | Acrylic acid |
| AOES: | Mono(2-acryloyloxyethyl)succinate |
| NASS: | Sodium styrene-4-sulfonate |

Zinc complex salt:  A complex prepared by dissolving 14 parts of zinc oxide, 12 parts of ammonium carbonate, 20 parts of amino acetate, and 30 parts of 25% aqueous ammonia, and the balance water to make the total amount 100 parts.
DEGE:  Diethylene glycol monoethyl ether
TBEP:  Tri(2-n-butoxyethyl)phosphate

Table 1

| | Example | | | | | Comparative Example | | | |
|---|---|---|---|---|---|---|---|---|---|
| | 1 | 2 | 3 | 4 | 5 | 1 | 2 | 3 | 4 |
| Monomer (part) | | | | | | | | | |
| BA | 47 | 45.5 | 51 | 51 | 47 | 48.2 | 28 | 28 | 28 |
| MMA | 8 | 7.5 | 7.5 | 7.5 | 8 | 3 | 43 | 43 | 43 |
| TBMA | 9.2 | 9.2 | 4.7 | 4.7 | 9.2 | 0 | 0 | 0 | 0 |
| CHMA | 5 | 5 | 3 | 3 | 5 | 3 | 0 | 0 | 0 |
| 2EHA | 0 | 0 | 0 | 0 | 0 | 27 | 0 | 0 | 0 |
| ST | 17 | 17 | 17 | 17 | 17 | 7 | 17 | 17 | 17 |
| MAA | 12 | 12 | 10 | 10 | 12 | 10 | 10 | 10 | 10 |
| AA | 1.5 | 1.5 | 1.5 | 1.5 | 1.5 | 1.5 | 2 | 2 | 2 |
| AOEK | 0 | 2 | 5 | 5 | 0 | 0 | 0 | 0 | 0 |
| NASS | 0.3 | 0.3 | 0.3 | 0.3 | 0.3 | 0.3 | 0 | 0 | 0 |
| Tg of Copolymer ($^{\circ}$C) | 12 | 12 | 0 | 0 | 12 | -32 | 45 | 45 | 45 |
| MFT of Copolymer ($^{\circ}$C) | 48 | 50 | 37 | 37 | 48 | Below 0$^{\circ}$C | Above 80$^{\circ}$C | Above 80$^{\circ}$C | Above 80$^{\circ}$C |
| Polyvalent metal (part) | | | | | | | | | |
| Zinc oxide | 4 | 4.5 | 5 | 5 | 4 | 4 | 4 | 0 | 0 |
| Zinc oxide complex (as ZnO) | 1 | 1 | 1 | 1 | 1 | 1 | 1 | 4 | 4 |
| Additive | | | | | | | | | |
| DEGE | 5 | 5 | 3.8 | 0 | 6.1 | 3.8 | 7.2 | 7.2 | 0 |
| TBEP | 1.3 | 1.3 | 1.2 | 1.5 | 1.5 | 1.2 | 1.7 | 1.7 | 1.5 |
| TVOC (%) | 5 | 5 | 3.8 | 0 | 6.1 | 3.8 | 7.2 | 7.2 | 0 |
| Evaluation results of polishing composition | | | | | | | | | |
| BHM resistance | 4 | 4.5 | 3.5 | 3.5 | 4.5 | 1 | 4 | 3.5 | 1 |
| Gloss (%) | 90.5 | 90.2 | 91.5 | 91.2 | 90.1 | 88.2 | 90.0 | 88.3 | 42.6 |
| Gloss maintenance rate | 76 | 78 | 81 | 83 | 71 | 53 | 68 | 60 | 48 |
| Recoatability | Good | Good | Good | Good | Good | Good | Bad* | Bad* | Bad* |
| Adhesion | 4 | 4 | 4 | 4 | 3 | 3 | 2 | 2 | 1 |

* Gloss reduced

The polishing composition of the present invention excels in durability, adhesion to substrates, and recoatability that are well balanced with removability with an alkali, and exhibits decreased TVOC due to absence or low content of a low boiling point coalescent agent and plasticizer. The polishing composition is therefore suitable for use particularly as a floor polish, as well as a polish for furniture, vehicles, and the like.

Obviously, numerous modifications and variations of the present invention are possible in light of the above teachings. It is therefore to be understood that, within the scope of the appended claims, the invention may be practiced otherwise than as specifically described herein.

A reaction product of (I) an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b), provided that the total of monomers (a), (b), and (c) is 100 wt%, the copolymer having a Tg from -30°C to +20°C, and (II) a polyvalent metal compound. The reaction product is useful as a floor polish excelling in durability, adhesion to substrates, and recoatability that are well balanced with removability with an alkali, and decreased TVOC due to absence or low content of a low boiling point coalescent agent and plasticizer.

**Claims**

1. A reaction product of (I) an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b) , provided that the total of monomers (a), (b), and (c) is 100 wt%, the copolymer having a glass transition temperature from -30°C to +20°C, and (II) a polyvalent metal compound.

2. The reaction product according to claim 1, wherein the glass transition temperature of the copolymer is from -20°C to +20°C.

3. The reaction product according to claim 1, wherein the polyvalent metal compound is selected from the group consisting of oxides, hydroxides, carbonates, acetates, hypophosphates, phosphates, and sulfates of calcium, magnesium, zinc, aluminum, tin, tungsten, and zirconium.

4. The reaction product according to claim 1, wherein the polyvalent metal compound is selected from the group consisting of calcium hydroxide, calcium acetate, calcium hypophosphate, calcium phosphate, zinc oxide, zinc hydroxide, zinc carbonate, and zinc sulfate.

5. A polishing composition comprising a reaction product of (I) an aqueous emulsion of a copolymer of (a) 5-50 wt% of an ethylenically unsaturated carboxylic acid monomer and/or the salt thereof, (b) 0.05-20 wt% of ethylenically unsaturated sulfonic acid monomer and/or the salt thereof, and (c) other ethylenically unsaturated monomers polymerizable with the monomers (a) and (b) , provided that the total of monomers (a) , (b) , and (c) is 100 wt%, the copolymer having a glass transition temperature from -30°C to +20°C, and (II) a polyvalent metal compound.

6. The polishing composition according to claim 5, further comprising one or more components selected from the group consisting of other resin emulsion, rubber emulsion, alkali-soluble resin, wax emulsion, coalescent agent, plasticizer, wetting agent, dispersant, leveling agent, and antiseptic agent.

7. The polishing composition according to claim 6, wherein other resin emulsion is an emulsion of an acrylic resin having a glass transition temperature from -30°C to +70°C.

8. The polishing composition according to claim 7, wherein the acrylic resin is a copolymer comprising at least one alkyl (meth) acrylate selected from the group consisting of methyl methacrylate, ethyl (meth)acrylate, n-butyl (meth) acrylate, i-butyl (meth)acrylate, t-butyl (meth)acrylate, 2-ethylhexyl (meth)acrylate, and cyclohexyl (meth)acrylate.

## EUROPEAN SEARCH REPORT

**European Patent Office**

Application Number

EP 03 01 9935

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | EP 0 373 918 A (ROHM AND HAAS COMPANY) 20 June 1990 (1990-06-20) * page 6, line 19 - line 29 * * page 7, line 33 - line 36; claims 1-15 * | 1-8 | C08F8/44 C09D133/02 |
| Y | EP 0 943 669 A (ROHM AND HAAS COMPANY) 22 September 1999 (1999-09-22) * page 3, line 19 - line 54 * * page 4, line 19 - line 34; claims 1-4 * | 1-8 | |
| Y | EP 0 054 803 A (BAYER AG) 30 June 1982 (1982-06-30) * page 4, line 12 - page 5, line 5 * * page 8, line 1 - line 21; claims 1-9 * | 1-8 | |
| Y | EP 0 982 383 A (BASF AG) 1 March 2000 (2000-03-01) * page 3, line 17 - line 36 * * page 5, line 35 - page 6, line 1; claims 1-10 * | 1-8 | |
| A | WO 91 12278 A (CHEMISCHE FABRIK STOCKHAUSEN GMBH) 22 August 1991 (1991-08-22) * claims 1-7 * | 1 | **TECHNICAL FIELDS SEARCHED (Int.Cl.7)** C08F C09D |
| A | US 4 680 339 A (D. W. FONG) 14 July 1987 (1987-07-14) * claims 1-8 * | 1 | |
| A | EP 0 664 324 A (YUHO CHEMICALS INC.) 26 July 1995 (1995-07-26) * claims 1-12 * | 1 | |
| | -/-- | | |

The present search report has been drawn up for all claims

| Place of search | Date of completion of the search | Examiner |
|---|---|---|
| THE HAGUE | 24 November 2003 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## EUROPEAN SEARCH REPORT

**European Patent Office**

**Application Number**

EP 03 01 9935

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 92 17423 A (EXXON RESEARCH AND ENGINEERING COMPANY) 15 October 1992 (1992-10-15) * page 10, paragraph 3 – page 12, paragraph 1; claims 1-15 * | 1 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 24 November 2003 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**     EP 03 01 9935

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2003

| Patent document cited in search report | | Publication date | Patent family member(s) | | Publication date |
|---|---|---|---|---|---|
| EP 373918 | A | 20-06-1990 | AT | 141627 T | 15-09-1996 |
| | | | AU | 625107 B2 | 02-07-1992 |
| | | | AU | 4616389 A | 21-06-1990 |
| | | | BR | 8906509 A | 28-08-1990 |
| | | | CA | 2004525 A1 | 16-06-1990 |
| | | | DE | 68926994 D1 | 26-09-1996 |
| | | | DE | 68926994 T2 | 13-03-1997 |
| | | | DK | 638189 A | 17-06-1990 |
| | | | EP | 0373918 A2 | 20-06-1990 |
| | | | ES | 2090043 T3 | 16-10-1996 |
| | | | HK | 216496 A | 27-12-1996 |
| | | | JP | 2219863 A | 03-09-1990 |
| | | | JP | 3034888 B2 | 17-04-2000 |
| | | | NO | 894976 A | 18-06-1990 |
| | | | NZ | 231759 A | 26-08-1992 |
| | | | PT | 92592 A ,B | 29-06-1990 |
| EP 943669 | A | 22-09-1999 | AU | 1735099 A | 30-09-1999 |
| | | | BR | 9900821 A | 28-12-1999 |
| | | | CN | 1230579 A | 06-10-1999 |
| | | | EP | 0943669 A1 | 22-09-1999 |
| | | | JP | 11349900 A | 21-12-1999 |
| | | | US | 6043314 A | 28-03-2000 |
| | | | ZA | 9901340 A | 20-08-1999 |
| EP 54803 | A | 30-06-1982 | DE | 3048085 A1 | 22-07-1982 |
| | | | EP | 0054803 A1 | 30-06-1982 |
| | | | JP | 57125221 A | 04-08-1982 |
| | | | US | 4385137 A | 24-05-1983 |
| EP 982383 | A | 01-03-2000 | DE | 19838668 A1 | 02-03-2000 |
| | | | EP | 0982383 A1 | 01-03-2000 |
| | | | JP | 2000073035 A | 07-03-2000 |
| | | | US | 2001041764 A1 | 15-11-2001 |
| WO 9112278 | A | 22-08-1991 | DE | 4004953 A1 | 22-08-1991 |
| | | | AT | 106907 T | 15-06-1994 |
| | | | AU | 640747 B2 | 02-09-1993 |
| | | | AU | 7236991 A | 03-09-1991 |
| | | | CA | 2075925 A1 | 20-08-1991 |
| | | | DE | 59101881 D1 | 14-07-1994 |
| | | | DK | 516656 T3 | 10-10-1994 |
| | | | WO | 9112278 A1 | 22-08-1991 |
| | | | EP | 0516656 A1 | 09-12-1992 |
| | | | ES | 2052479 T1 | 16-07-1994 |
| | | | FI | 923675 A ,B, | 17-08-1992 |

## ANNEX TO THE EUROPEAN SEARCH REPORT
## ON EUROPEAN PATENT APPLICATION NO.

EP 03 01 9935

This annex lists the patent family members relating to the patent documents cited in the above–mentioned European search report.
The members are as contained in the European Patent Office EDP file on
The European Patent Office is in no way liable for these particulars which are merely given for the purpose of information.

24-11-2003

| Patent document cited in search report | | | Publication date | Patent family member(s) | | Publication date |
|---|---|---|---|---|---|---|
| WO 9112278 | A | | | GR | 93300011 T1 | 28-04-1993 |
| | | | | JP | 3013263 B2 | 28-02-2000 |
| | | | | JP | 5504586 T | 15-07-1993 |
| | | | | NO | 923237 A ,B, | 18-08-1992 |
| | | | | US | 5297740 A | 29-03-1994 |
| | | | | US | 5241011 A | 31-08-1993 |
| US 4680339 | A | 14-07-1987 | | AT | 88482 T | 15-05-1993 |
| | | | | CA | 1254344 A1 | 16-05-1989 |
| | | | | DE | 3785476 D1 | 27-05-1993 |
| | | | | DE | 3785476 T2 | 12-08-1993 |
| | | | | EP | 0238852 A2 | 30-09-1987 |
| | | | | ES | 2054625 T3 | 16-08-1994 |
| | | | | US | 4777219 A | 11-10-1988 |
| EP 664324 | A | 26-07-1995 | | WO | 9407959 A1 | 14-04-1994 |
| | | | | DE | 69219626 D1 | 12-06-1997 |
| | | | | DE | 69219626 T2 | 23-10-1997 |
| | | | | EP | 0664324 A1 | 26-07-1995 |
| | | | | JP | 2533974 B2 | 11-09-1996 |
| | | | | JP | 5005083 A | 14-01-1993 |
| | | | | US | 5541265 A | 30-07-1996 |
| WO 9217423 | A | 15-10-1992 | | US | 5256181 A | 26-10-1993 |
| | | | | CA | 2106780 A1 | 29-09-1992 |
| | | | | EP | 0576469 A1 | 05-01-1994 |
| | | | | NO | 933439 A | 26-11-1993 |
| | | | | WO | 9217423 A1 | 15-10-1992 |

EPO FORM P0459

For more details about this annex : see Official Journal of the European Patent Office, No. 12/82